## Europäisches Patentamt

## European Patent Office

## Office européen des brevets

(11) Publication number: **0 152 139 B1**

(12) **EUROPEAN PATENT SPECIFICATION**

(45) Date of publication of the patent specification:
28.10.87

(51) Int. Cl.⁴: **B 01 D 1/28,** B 01 D 1/26

(21) Application number: **85200117.1**

(22) Date of filing: **05.02.85**

---

(54) Process and apparatus for the evaporation of liquids.

---

(30) Priority: **10.02.84 NL 8400443**

(43) Date of publication of application:
**21.08.85 Bulletin 85/34**

(45) Publication of the grant of the patent:
**28.10.87 Bulletin 87/44**

(84) Designated Contracting States:
**DE FR GB NL SE**

(56) References cited:
**DE - C - 973 059**
**GB - A - 587 122**
**US - A - 2 800 955**

(73) Proprietor: **DMV-CAMPINA B.V., NCB-Laan 80 P.O. Box 13, NL-5460 BA Veghel (NL)**

(72) Inventor: **Termote, Frank Aloysius Adrianus, Kievietdonk 2, NL-5467 AT Veghel (NL)**

(74) Representative: **van der Beek, George Frans, Ir. et al, Nederlandsch Octrooibureau P.O. Box 29720, NL-2502 LS The Hague (NL)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The invention relates to a process for the evaporation of liquids through indirect heating of the liquid by means of a condensable heating medium in one or more evaporators, each of which is made up of two or more separate evaporator bodies through which the condensable heating medium flows in series or in parallel.

Compound evaporators are generally known. In principle, both the condensable heating medium and the liquid to be evaporated can have the same composition, temperature and pressure in all bodies. However, in most cases there is a difference in both the liquid flowing through a body and the condensable heating medium or in one of them per evaporator body. Both steam and vapour obtained in a previous step can be used as the condensable heating medium. The heat of condensation is transferred indirectly to liquid not yet evaporated, which is concentrated by boiling at the prevailing pressure. The escaping vapour can either be condensed at a lower temperature or can first be increased in pressure and subsequently condensed. This pressure increase is achieved in a thermocompressor by mixing with fresh steam. The vapour is increased in pressure, without mixing, in a mechanical vapour compressor. Through this pressure increase, the vapour can condense at a higher temperature than that at which the evaporation took place, so that the vapour can serve as the heating medium for the liquid from which it came. The condensable heating medium is also described as «vapour» below, irrespective of whether it is unmixed vapour or a mixture of vapour and fresh steam.

If the vapour on all evaporator bodies is of the same origin, one speaks of a single-effect evaporator. With a multiple-effect evaporator, the vapour developed in the first effect is taken to the second effect and condensed there, and so forth, until the vapour from the last stage is condensed in a condenser or similar apparatus or possibly recirculated after recompression.

If all effects consist of one body and the liquid to be evaporated flows from the first effect to the second effect, and so on, up to the last effect, one speaks of a «forward feed» system. With a «backward feed» system, the liquid to be evaporated is fed into the last effect, and the concentrate is drawn off from the first effect. With parallel feed, liquid to be evaporated is fed into all effects, while concentrate is drawn off from each of the effects. With another method of feed, one also talks of a «mixed feed» system.

Netherlands Patent Appl. 8 001 576 (corresponding to EP-A-36 235) describes an example of a mixed feed system. In the process disclosed in this patent application for the evaporation of a liquid in a number of stages, with mechanical compression of the treatment vapour to return it to the initial temperature and pressure level, in which the latent heat of the vapour escaping from a previous stage is used in the following stage with a lower boiling point of the product in order to evaporate it further, the evaporators connected in series for product throughflow are divided into a number of groups, and the ingoing treatment vapour and outgoing released vapour for each group are connected in parallel to the discharge and feed pipes of the mechanical compressor. In the example given, the thin liquid in succession runs through three evaporator bodes, which function as first, second and third effect of a triple-effect evaporator, and subsequently reaches the first and then the second effect of a double-effect evaporator. Finally, another single-effect is passed through, although the same vapour is fed into all these groups and they also have a common vapour discharge. As regards the liquid, all evaporator bodies are in series but, as regards the vapour, there is series flow in each group and parallel flow when the individual groups are compared.

Evaporators in which the vapour flows both in series and in parallel are known in the form of multiple-effect evaporators, in which per effect it is necessary to have a large evaporating surface on account of the low temperature difference which is available, in particular when rise in boiling point plays an important role and the quantity of liquid is too small to provide uniform spraying of the evaporating surface. In that case, it is necessary to divide the effect into a number of parts, in which the liquid flows in series connection, but where the vapour for all those parts is the same. If those parts are therefore assembled in a vapour chamber, so that there is only one evaporator body which is passed through twice by the liquid, one speaks of an «internal division». If the parts form separate bodies, one speaks of external division of the effect. Within such an externally divided effect there is parallel flow of the vapour, but as regards the various effects, there is series flow of the vapour.

Important parameters in the design of an evaporator are the costs of equipment and energy which, depending on the number of effects, must leas to optimum design, so that a lower energy supply is needed. Here, one must, however, take into account the flooding of all bodies, something which can lead to division of effects, which can again increase the equipment costs. Once one has opted for a specific design, one has an evaporator which can produce an optimum performance only if there is a specific quantity of liquid for evaporation with a specific concentration and other properties. If the actual quantity and quality of the liquid deviate from this specific quantity and quality, the evaporator soon does not work at its best. Increasing the energy supply in order to compensate for a falling quantity of dry matter in the concentrate soon leads to an inadmissible rise in temperature or the danger of boiling dry or pollution of the evaporator surface. In particular, if the quantity of liquid to be avaporated varies with time, if the concentration of the liquid to be evaporated is not constant, or if properties which are important in connection with heat transfer (the so-called K value), for example the viscosity, can change, the evaporation will in general not take place in optimum fashion, because the design has to be adapted to the most unfavourable conditions, otherwise pollution quickly occurs and the service life of the plant is limited.

It has been found that these disadvantages can be reduced considerably when according to the invention one switches the flow of the condensable heating medium to the evaporator bodies from series flow to parallel flow or vice versa if the heat transfer to the liquid to be evaporated in the evaporator elements falls below or rises above a certain value.

How and when the switch should take place is easily apparent during the operation of the plant. When the liquid properties are such that heat transfer is difficult, in which case the K value is low, one can feed condensable heating medium (vapour) of the same high temperature to two bodies so that sufficient heat is supplied to the liquid to evaporate the required quantity. But when the liquid properties change, so that sufficient evaporation is still possible even when there is a smaller temperature difference between vapour supplied and liquid to be evaporated, it is possible according to the invention to alter the flow of the vapour in such a way that the second body functions as a follow-up effect in relation to the first body.

The vapour coming from the first body then serves as the condensable heating medium for the second body, so that there is a lower energy supply to achieve the required evaporation or concentration of solvent. If the K value falls due to pollution or changing of the composition of the liquid, one can maintain the evaporation capacity by means of a parallel connection, although this costs more in energy supply.

In the simplest form, an evaporator is concerned with two separate evaporator bodies, which in the parallel connection are both provided with a steam or other energy inlet and with a vapour recompressor, if necessary, and also with a connection on the discharge side with a condenser or other device with the same function. But it is equally possible to carry out such a connection with several bodies so that a triple-effect evaporator is first changed into a double-effect evaporator and then into a single-effect evaporator, as the heat transfer change and adaptation is necessary.

It is also possible that a particular effect consists of more than one body, by successively connecting in parallel the vapour flow from the individual bodies with that from the bodies of the preceding effect. In this way, one can connect an evaporator consisting of three bodies in such a way that it consists of two effects, the first with one evaporator body and the second divided up into two evaporator bodies. One must then successively first detach one of those two bodies from the second effect and feed vapour to it separately, so that said evaporator body functions as a single-effect evaporator. Then one must also give the second evaporator body its own vapour feed, in which case the discharged vapour must be taken from the original first effect to the condenser. Since in such a switchover not only the direction of flow, but also the throughflow rate, the temperature and the pressure of the vapour will be changed in practically all points of the entire plant, such a switchover must be gradual and precisely controlled during the running of an evaporator which is working, so that critical situations never occur, for example so that temperatures never rise inadmissibly high, or inadequate flooding causes excessive pollution or even drying out. Therefore, the speed at which the supply of heating energy, the compressor energy and the discharge of vapour via supply of cooling medium to the condenser is regulated will have to be adapted to the speed at which the vapour flow changes. The evaporator is therefore preferably provided with measurement and control equipment which can automatically switch the vapour flow over the bodies concerned from series flow to parallel and vice versa. The switch can be started by the operators turning on the switching unit, but the unit can also be provided with measuring elements in such a way that when a certain control limit is exceeded the unit itself handles the switching and completes ist. In particular, it is then possible, at a certain value of the final dry matter content of the evaporated liquid, of the condenser temperature and the maximum temperatures of the liquid and the vapour in the evaporator, to choose such a flow of vapour from and to the various evaporator bodies that the lowest possible energy consumption is achieved. A process computer, linked to ordinary measurement and control elements, and provided with suitable programming can then ensure that the evaporator always gives the best performance, which is possible with a mimimun of energy costs, regardless of variations in pollution of the evaporator or changing of the liquid properties, but also with an increased supply of liquid.

The invention also relates to an apparatus for the evaporation of liquids, which comprises one or more evaporators, each of which is made up of two or more separate evaporator bodies, provided with closable inlet lines for condensable heating medium and inlets for liquid to be evaporated, outlets for condensate and liquid, vapour separators, pumps, pipes and control elements per evaporator body, characterized in that automatic measuring and control elements are provided for switching the flow of condensable heating medium from series flow to parallel flow or vice versa.

It is to be noted that from DE-C-973 059 a process and an apparatus for the evaporation of scale forming liquids are known, wherein in a multiple-effect evaporation system an evaporator body of the system serves as a condenser in such a way that in this body vapour, which has been formed by evaporation of the liquid in another evaporator body belonging to the system, is condensed by cooling with the use of a cooling liquid, which does not form scale, the said evaporator body serving as a condensor being operated in such a way that cooling liquid is passed through the evaporation space instead of the liquid to be evaporated. However, provisions for switching the flow of the condensable vapour, which is used as a heating medium, have not been described in DE-C-973 059.

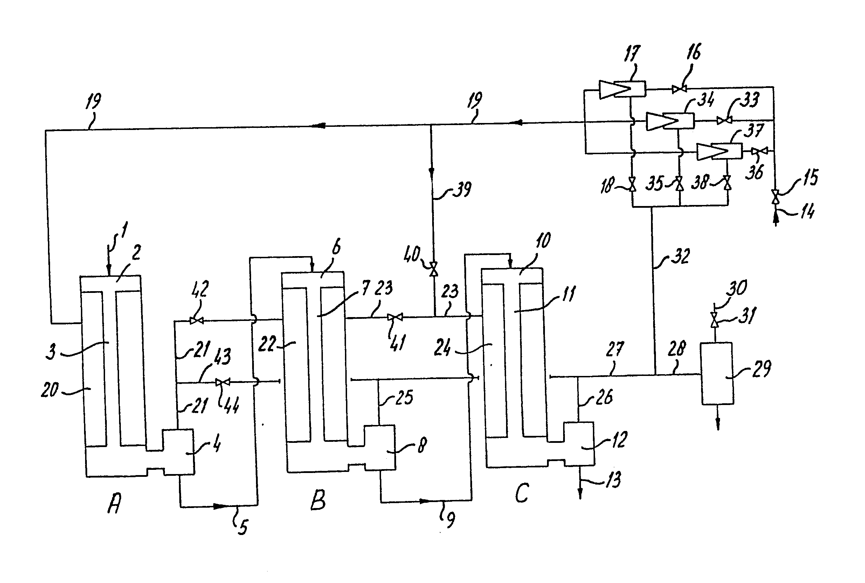

The invention is explained in greater detail with reference to the drawing, which shows an evaporator of the falling film type, consisting of three bodies A, B and C, each of which comprises an expansion space, a bundle of tubes surrounded by a vapour chamber, and a vapour separator.

According to the drawing, liquid to be evaporated flows via pipe 1 into expansion space 2 of the first body A. The resulting vapour-liquid mixture flows through bundle of tubes 3 to vapour separator 4, from where the separated liquid goes via pipe 5 to the second body B. Via expansion space 6, bundle of tubes 7 and vapour separator 8 of body B, the liquid passes through pipe 9 to the third body C, in which expansion space 10, bundle of tubes 11 and vapour separator 12 are passed through, so that concentrated liquid leaves the evaporator via pipe 13.

Heat exchangers for preheating the liquid or cooling the concentrate are not shown in the drawing.

Steam is conducted via pipe 14 and valves 15 and 16 to ejector 17, and from there via pipe 19 to vapour chamber 20 of the first body A. As will be explained in greater detail below, the vapour obtained through evaporation of the liquid and sucked in by ejector 17 and possibly ejectors 34 and 37 and raised to higher pressure, is also recirculated via pipe 19. The heating medium condenses in vapour chamber 20 and gives off its heat to the material to be evaporated in bundle of tubes 3. The condensate formed in vapour chamber 20 is discharged from the vapour chamber via a pipe is not shown in the drawing. If the liquid gives no evaporation problems and the quantity of liquid for evaporation is not too high, the plant can act further as a double-effect evaporator. The vapour discharged from vapour separator 4 is then taken via pipe 21 to vapour chamber 22 of the second body B and from there direct also via pipe 23 to vapour chamber 24 of the third body C. In the vapour chambers 22 and 24 also, the vapour condenses and gives off its heat to the material to be evaporated in the bundle of tubes 7 and 11. The vapour chambers are provided with outlets (not shown in the drawing) for the condensate formed. The discharged vapour from vapour separator 8 of the second body B is taken via pipes 25, 27 and 28 to condenser 29. The vapour from separator 12 of the third body C is also taken to condenser 29, via pipes 26, 27 and 28. Cooling water is conducted to this condenser 29 via pipe 30 and valve 31. Part of the vapour from pipe 27 can be sucked up via pipe 32 by ejector 17 via valve 8 and, if necessary, by ejectors 34 and/or 37, for which purpose the valves 8, 16, 33, 35, 36 and 38 have to be put at the correct setting. With this method of evaporation, the vapour chamber 22 and 24 are in series relative to vapour chamber 20, but parallel to each other.

If the liquid in pipe 13 is not sufficiently concentrated, the evaporation process can be adjusted by supplying more heating medium. But if, through that additional supply of heating medium, an inadmissible temperature occurs in the first body A, or the evaporating surface in this first body becomes too small for the transfer of all the required heat, the process according to the invention can be applied by closing valve 41 in pipe 23 and conducting heating medium via pipe 39 through open valve 40 from pipe 19 to vapour chamber 24 of the third body C. With this switching, this third body C therefore acts as a single-effect evaporator in which the vapour chamber 24 is parallel with the vapour chamber 20 and 22 of the bodies A and B, which are in series, and together form a double-effect evaporator. Since the most concentrated liquid flows through the third body C, the rise in boiling point of the liquid to be evaporated is greater in this body than in the other bodies. For that reason, the switching over of this third body has a greater effect on the overall evaporation process than if the second body is detached from the other two bodies, as far as the vapour flows are concerned, because in the second body a smaller boiling point rise occurs.

If the switching over described above is insufficient to compensate for the fall in the evaporation output, the vapour discharge from vapour separator 4 to vapour chamber 22 via pipe 21 can then be ended by closing valve 42, while valve 44 is opened and the vapour from vapour separator 4 of the first body A is taken direct to condenser 29. By opening of valve 41, vapour chamber 22 of the second body B gets the same heating medium from pipe 19 as the other two bodies A and C. Then all three evaporator bodies function as single-effect evaporators with the same temperature of supplied and discharged vapour, so that they are connected in series as regards the liquid, but in parallel as regards the vapour.

The sequence and speed of the opening and closing of the various valves which are involved in the switchovers, including those for supply of heating medium or cooling water for the condenser, must be coordinated to ensure that too high a temperature or too low a supply of liquid cannot occur at any point, and temperatures and pressures change gradually, even if the switchover is in the opposite sequence to that outlined above, because the liquid properties change beneficially and the K values increase, so that a switchover can be made from single-effect evaporation to doubl-effect evaporation.

Although the drawing illustrates only working with one evaporator with three evaporator bodies, it is obvious that the principle of the process also applies to apparatuses comprising more than one evaporator, or where each of the evaporators contains two or more evaporator bodies.

It also goes without saying that in the process according to the invention one can not only use falling film evaporators, but other types of evaporators can also be used in the same switchable fashion, and the evaporation process can thus be adapted to varying starting conditions. Examples are evaporators with a rising film or with plate exchangers. Nor is it in any way necessary for all separate bodies to be connected in series as regards the liquid flow in one or more of the evaporators, as illustrated in the drawing.

Even if one does not condense vapour flowing from pipe 28 in condenser 29, but instead subjects it to mechanical recompression and recirculation, the process according to the invention can be used if liquid has to be evaporated under varying conditions to as constant a dry matter content as possible.

The process according to the invention can be used, for example, for the processing of liquid by-products obtained in the recovery of lactose and other milk products and in the concentration of liquids which on account of their origin have more or less variable compositions, for example juices and other extracts of natural origin, liquids obtained by fermentation, in which there are metabolic products produced by micro-organisms, or by-products and washing liquids resulting from the extraction of carbohydrates, fats or vitamins from natural products.

The solvent in the liquid to be evaporated is in many cases water, but can also be, for example, an organic solvent.

## Claims

1. Process for the evaporation of liquids through indirect heating of the liquid by means of a condensable heating medium in one or more evaporators, each of which is made up of two or more separate evaporator bodies through which the condensable heating medium flows in series or in parallel, characterised·in that one switches the flow of the condensable heating medium to the evaporator bodies from series flow to parallel flow or vice versa if the heat transfer to the liquid to be evaporated in the evaporator bodies falls below or rises above a certain value.

2. Process according to Claim 1, characterised in that, depending on the quantity and quality of the liquid to be evaporated, the flow of the condensable heating medium can be switched over two or more bodies from series flow to parallel flow or vice versa.

3. Process according to Claim 2, characterised in that the flow of the condensable heating medium is switched over by means of automatic control.

4. Process according to Claims 2 and 3, characterised in that at a certain value of the final dry matter content of the evaporated liquid, of the temperature and the maximum temperatures of the liquid and vapour in the evaporator(s) one regulates the flow of condensable heating medium from and to the various bodies in such a way that the energy consumption is at a minimum.

5. Apparatus for the evaporation of liquids, which comprises one or more evaporators, each of which is made up to two or more separate evaporator bodies, provided with closable inlet lines for condensable heating medium and inlets for liquid to be evaporated, outlets for condensate and liquid, vapour separators, pumps, pipes and control elements per evaporator body, characterised in that automatic measuring and control elements are provided for switching the flow of condensable heating medium from series flow to parallel flow or vice versa.

6. Apparatus according to Claim 5, characterised in that provision is made for programmable measuring and control elements which at a fixed value of the final dry matter content of the evaporated liquid, of the temperature and the maximum temperature of the liquid and the vapour in the evaporator(s) can always produce such a flow of condensable heating medium from and to the various bodies that the energy consumption is at a minimum.

## Patentansprüche

1. Verfahren zur Verdampfung von Flüssigkeiten durch indirektes Erhitzen der Flüssigkeit mittels eines kondensierbaren Wärmeträgers in einem oder mehreren Verdampfern, deren jeder aus zwei oder mehr einzelnen Verdampferkörpern besteht, durch die der kondensierbare Wärmeträger entweder in Serie oder parallel strömt, dadurch gekennzeichnet, dass man den Strom des kondensierbaren Wärmeträgers zu den Verdampferkörpern von Serien- auf Parallelstrom bzw. umgekehrt umschaltet, wenn die Wärmeübertragung auf die in den Verdampferkörpern zu verdampfende Flüssigkeit einen bestimmten Wert unter- bzw. überschreitet.

2. Verfahren nach Anspruch 1, dadurch gekennzeichnet, dass in Abhängigkeit von Menge und Güte der zu verdampfenden Flüssigkeit der Strom des kondensierbaren Wärmeträgers über zwei oder mehr Körper von Serien- auf Parallelstrom bzw. umgekehrt umschaltbar ist.

3. Verfahren nach Anspruch 2, dadurch gekennzeichnet, dass der Strom des kondensierbaren Wärmeträgers durch automatische Steuerung umschaltbar ist.

4. Verfahren nach Anspruch 2 oder 3, dadurch gekennzeichnet, dass bei einem bestimmten Wert des Trockenstoff-Endgehalts der verdampften Flüssigkeit, der Temperatur und der Höchsttemperaturen der Flüssigkeit und des Dampfs in dem Verdampfer bzw. den Verdampfern der Strom des kondensierbaren Wärmeträgers von und zu den verschiedenen Körpern derart geregelt ist, dass der Energieverbrauch minimal ist.

5. Vorrichtung zur Verdampfung von Flüssigkeiten, die einen oder mehrere Verdampfer umfasst, deren jeder aus zwei oder mehr einzelnen Verdampferkörpern besteht, wobei jeder Verdampferkörper absperrbare Einlassleitungen für kondensierbaren Wärmeträger und Einlässe für zu verdampfende Flüssigkeit, Auslässe für Kondensat und Flüssigkeit, Dampfabscheider, Pumpen, Leitungen und Stellelemente aufweist, dadurch gekennzeichnet, dass zum Umschalten des Stroms des kondensierbaren Wärmeträgers von Serien- auf Parallelstrom bzw. umgekehrt automatische Mess- und Regelorgane vorgesehen sind.

6. Vorrichtung nach Anspruch 5, dadurch gekennzeichnet, dass programmierbare Mess- und Regelorgane vorgesehen sind, die bei einem festen Wert des Trockenstoff-Endgehalts der verdampften Flüssigkeit, der Temperatur und der Höchsttemperatur der Flüssigkeit und des Dampfs in dem Verdampfer bzw. den Verdampfern ständig einen solchen Strom von kondensierbarem Wärmeträger von und zu den verschiedenen Körpern erzeugen können, dass der Energieverbrauch minimal ist.

## Revendications

1. Un procédé pour l'évaporation de liquides par chauffage indirect du liquide au moyen d'un milieu de chauffage condensable dans un ou plusieurs évaporateurs, chacun d'entre eux étant constitué de deux (ou plus) corps d'évaporateur séparés, au travers desquels le milieu de chauffage condensable s'écoule en série ou en parallèle, caractérisé en ce que l'on change le mode d'écoulement du milieu de chauffage condensable vers les corps d'évaporateur d'un flux série à un flux parallèle, ou vice versa, si le transfert de chaleur au liquide à évaporer dans les éléments d'évaporateur descend en dessous d'une certaine valeur ou s'élève au dessus d'une certaine valeur.

2. Le procédé de la revendication 1, caractérisé en ce que, en fonction de la quantité et de la qualité du liquide à évaporer, le mode d'écoulement du milieu de chauffage condensable peut être modifié, pour deux corps d'évaporateur ou plus, d'un flux série à un flux parallèle ou vice versa.

3. Le procédé de la revendication 2, caractérisé en ce que le flux du milieu de chauffage condensable est modifié au moyen d'une commande automatique.

4. Le procédé de l'une des revendications 2 et 3, caractérisé en ce que, pour une certaine valeur du contenu en matière sèche finale du liquide évaporé, de la température et des températures maximales du liquide et de la vapeur dans les évaporateurs, on régule le flux de milieu de chauffage condensable en provenance des différents corps d'évaporateur et en direction de ceux-ci de manière à minimiser la consommation énergétique.

5. Un appareil pour l'évaporation de liquides, qui comprend un ou plusieurs évaporateurs, chacun étant constitué de deux (ou plus) corps d'évaporateur séparés, pourvus de conduites d'entrée d'un milieu de chauffage condensable pouvant être fermées et de conduites d'entrée pour un liquide à évaporer, de sorties pour le condensat et le liquide, de séparateurs de vapeur, de pompes, de conduites et d'éléments de commande pour chaque corps d'évaporateur, caractérisé en ce que des éléments de mesure et de commande automatique sont prévus qui permettent de modifier le flux du milieu de chauffage condensable d'un flux série en un flux parallèle ou vice versa.

6. Le dispositif de la revendication 5, caractérisé en ce qu'il est prévu des éléments programmables de mesure et de commande qui, pour une valeur fixée du contenu en matière sèche finale du liquide évaporé, de la température et des températures maximales du liquide et de la vapeur dans les évaporateurs, peuvent toujours produire, en provenance des différents corps d'évaporateur et vers ceux-ci, un flux de milieu de chauffage condensable tel que la consommation énergétique soit minimale.